# EUROPÄISCHE PATENTSCHRIFT

(11) **EP 2 742 220 B1**
(45) Veröffentlichungstag und Bekanntmachung des Hinweises auf die Patenterteilung: **23.03.2016**
(21) Anmeldenummer: 12756387.2
(22) Anmeldetag: 07.08.2012
(51) Int. Cl.: F02B 37/12, F02B 37/22, F02B 43/00, F02B 69/04, F02D 9/02, F02D 9/04, F02D 23/00

(54) **VORRICHTUNG UND VERFAHREN ZUM REGELN EINES OTTO-GASMOTORS**
DEVICE AND METHOD FOR REGULATING A SPARK-IGNITION GAS ENGINE
DISPOSITIF ET PROCÉDÉ DESTINÉS À RÉGLER UN MOTEUR À ALLUMAGE COMMANDÉ FONCTIONNANT AU GAZ

(30) Priorität: 12.08.2011 DE 102011110073; 14.09.2011 DE 102011113145
(43) Veröffentlichungstag der Anmeldung: 18.06.2014
(73) Patentinhaber: Caterpillar Energy Solutions GmbH, 68167 Mannheim (DE)
(72) Erfinder: STELLWAGEN, Karl, 67227 Frankenthal (DE)
(74) Vertreter: Kramer Barske Schmidtchen Patentanwälte PartG mbB
(86) Internationale Anmeldenummer: PCT/EP2012/065442
(87) Internationale Veröffentlichungsnummer: WO 2013/023957

(56) Entgegenhaltungen:
- WO-A1-2008/032187
- DE-A1-102006 042 443
- DE-A1-102009 049 394
- GB-A- 1 140 909
- JP-A- 2003 193 896

## Beschreibung

Die Erfindung bezieht sich auf eine Schutzvorrichtung für einen Otto-Gasmotor mit einer Drosselklappe für Gas-Luftgemisch GL und mit einem eine Turbine aufweisenden Abgasturbolader, dem ein Drosselorgan für Abgas A zugeordnet ist, wobei eine Detektionseinheit vorgesehen ist, mittels derer ein Ist-Differenzdruck Δp über der Drosselklappe erfassbar ist, und eine Steuereinheit vorgesehen ist, mittels derer in Abhängigkeit des Ist-Differenzdrucks Δp die Stellung des Drosselorgans veränderbar ist.

Beim Betrieb eines aufgeladenen Ottomotors, insbesondere eines Gasmotors mit unterschiedlichen Kraftstoffen oder Mischungen derselben, ändert sich der Ladedruck vor der Drosselklappe, während der Gemischdruck vor dem Zylinder nahezu konstant bleibt, wenn die Kraftstoffe unterschiedliche Brenneigenschaften haben, wie z. B. Erdgas und Biogas. Dies deshalb, weil bei Gasmotoren aufgrund der unterschiedlichen Brenneigenschaften die Abgastemperatur vor der Turbine des Turboladers ansteigt. Damit steigt auch die Verdichterleistung an und es wird ein höherer Ladedruck erzeugt als notwendig.

Ein zu hoher Ladedruck führt beim Gasmotor zum Ansteigen des Differenzdruckes über der Drosselklappe, da der für den Betrieb mit konstanter Leistung erforderliche Druck vor dem Zylinderkopf bzw. nach der Drosselklappe nahezu konstant bleibt.

Bei Überschreitung eines Grenzwertes des Differenzdruckes über der Drosselklappe erreicht der Verdichter des Turboladers die Pumpgrenze. Bei modernen Turboladern mit "schmalen Kennfeldern" führt ein sehr hoher Differenzdruck zum "Pumpen". Pumpen bedeutet eine Instabilität in der Volumenförderung des Verdichters, die auch wegen anderer Nebeneffekte zu Anlagenstörungen und zu Turbolader- und Motorschäden führen können.

Um dies zu vermeiden, sind Lösungen bekannt, die den Differenzdruck über der Drosselklappe mittels Bypass am Verdichter bzw. Bypass an der Turbine des Turboladers regeln.

So ist auch bereits eine Brennkraftmaschine mit einem Abgasturbolader aus der DE 103 15 148 A1 bekannt. Dem Abgasturbolader ist eine Umgehungsleitung bzw. ein Bypass zugeordnet, der die Primärseite mit der Sekundärseite verbindet. Zur Absicherung gegen Pumpen des Verdichters kann dieser mit einer inneren Rezirkulation ausgeführt sein. Rezirkulation bedeutet, dass Luft bzw. Luftgemisch von der Sekundärseite des Verdichters auf die Primärseite des Verdichters zurückgeführt wird. Diese Rezirkulation kann auch schaltbar ausgeführt sein.

Aus der DE 10 2009 049 394 A1 ist eine Vorrichtung für einen Otto-Gasmotor bekannt, die zum einen eine Drosselklappe sowie eine Detektionseinheit für den Differenzdruck über der Drosselklappe sowie zum anderen ein Drosselorgan in einer Bypassleitung der Abgasturbine zwecks Regelung des Volumenstroms in der Bypassleitung aufweist.

Die WO 2008/032187 A1 beschreibt einen Motor mit im Abgasstrang des Motors befindlichen Steuerventilen, die über eine Steuereinheit in Abhängigkeit vom Betriebszustand des Motors gesteuert werden.

Der Erfindung liegt die Aufgabe zugrunde, eine Steuervorrichtung derart auszubilden und anzuordnen, dass ein Pumpen des Verdichters auf einfache Weise verhindert wird.

Insbesondere bei älteren Motoren oder Motoren, die ohne diese Einrichtungen, insbesondere ohne Bypassleitung installiert wurden, ist eine Nachrüstung sehr aufwendig, kostspielig bzw. nicht möglich, weil ganze Teile der Abgas- und Frischluftanlage neu entworfen und ausgetauscht werden müssten.

Gelöst wird die Aufgabe erfindungsgemäß dadurch, dass das Drosselorgan für das Abgas A mit Bezug zur Strömungsrichtung des Abgases A nur nach der Turbine vorgesehen ist. Eine Bypassleitung ist nicht vorgesehen. Die Detektionseinheit kann dabei auf die Erfassung der Drücke oder der Klappenstellung reduziert sein, wobei die Steuereinheit die Auswertung bzw. Berechnung des Ist-Differenzdrucks Δp vornimmt. Die Drücke werden also entweder direkt erfasst oder über die Stellung der Drosselklappe als Funktion des Ist-Differenzdrucks ermittelt. Das Drosselorgan bzw. die Abgasklappe beeinflusst durch unterschiedliche Stellungen den Abgasgegendruck an der Turbine des Abgasturboladers. Durch Messung des Lade- bzw. Gemischdruckes vor und nach der Drosselklappe bzw. durch Erfassung der Stellung der Drosselklappe kann der Ist-Differenzdruck über der Drosselklappe direkt ermittelt bzw. abgeleitet werden. Der gemessene Differenzdruck wird in einer einfachen Steuerung mit einem parametrisierbaren und hinterlegbaren Sollwert verglichen. Bei Abweichungen vom Sollwert wird ein Stellsignal an die Abgasklappe im Abgassystem bzw. an das entsprechende Stellglied gegeben, bis der gewünschte Soll-Differenzdruck über der Drosselklappe erreicht wird. Insgesamt kann durch Drosselung die Leistung der Turbine am Turbolader durch verkleinertes Druckgefälle zwischen Eintritt und Austritt verringert werden und damit auch der Ladedruck vor der Drosselklappe abgesenkt und somit ein Pumpen verhindert werden.

Auf diese Weise können Schäden an der Anlage und am Motor beim Betrieb mit unterschiedlichen Kraftstoffqualitäten bzw. Gaszusammensetzungen oder bei veränderlichen Umgebungsbedingungen, die Einfluss auf die Ansaugtemperatur haben, vermieden werden.

Diese Lösung ist auf jeder Anlage, unabhängig vom Motorhersteller und ohne Eingriff in die Motorarchitektur oder die vorhandene Motorsteuerung, nachrüstbar. Die Abgasklappe als klassisches Drosselorgan kann auf einfache Weise nachgerüstet werden. Wenn schon eine Abgasklappe für einen Bypass und/oder einen Abgas-Heizkesselstrang vorliegt, kann auch eines dieser beiden Drosselorgane erfindungsgemäß Anwendung finden. Hierzu sind lediglich das Erfassen des Ist-Differenzdrucks Δp über der Drosselklappe und eine entsprechende Regelung des Drosselorgans notwendig.

Sinnvoll ist, zur Steuerung bzw. Auslegung der Abgasklappe den Differenzdruck über der Drosselklappe heranzuziehen.

Verstellbare Abgasklappen sind auch geeignet für stark schwankende Umgebungsbedingungen wie die Ansaugtemperatur, da diese ebenfalls einen starken Einfluss auf den Ladedruck bzw. den Differenzdruck hat. Die Erfindung bezieht sich also auf eine Schutzvorrichtung für einen Otto-Gasmotor mit einer Drosselklappe für Gas-Luftgemisch GL und mit einem eine Turbine aufweisenden Abgasturbolader, wobei mit Bezug zur Strömungsrichtung eines Abgases A nur nach der Turbine ein Drosselorgan für das Abgas A vorgesehen ist, wobei eine Detektionseinheit vorgesehen ist, mittels derer ein Ist-Differenzdruck Δp über der Drosselklappe erfassbar ist, und eine Steuereinheit vorgesehen ist, mittels derer in Abhängigkeit des Ist-Differenzdrucks Δp die Stellung des Drosselorgans veränderbar ist. Gelöst wird die Aufgabe auch durch einen Abgasstrang eines Otto-Gasmotors bzw. einen Otto-Gasmotors mit vorgenannter Schutzvorrichtung nach Anspruch 4 bzw. 5.

Vorteilhaft kann es hierzu auch sein, wenn die Detektionseinheit zwei Drucksensoren P1, P2 zur Ermittlung des Ist-Differenzdrucks Δp über der Drosselklappe aufweist oder als Sensoreinheit zur Ermittlung der Stellung der Drosselklappe ausgebildet ist. Der Differenzdruck über der Drosselklappe kann auch in der Steuereinheit bzw. CPU berechnet werden, wenn die Einzeldrücke gemessen werden. Diese Messung ist auch mit einem Differenzdrucksensor möglich. Alternativ könnte auch als Maß für den Ist-Differenzdruck die Drosselklappenposition verwendet werden, d. h. das Drosselorgan bzw. die Position der Abgasklappe kann auch in Abhängigkeit der Öffnung der Drosselklappe bestimmt werden, da das Maß der Öffnung vom Differenzdruck über der Drosselklappe abhängt. Der Sollwert für die Regelung ist in diesem Fall die Drosselklappenposition bzw. die Position des Drosselklappen-Stellgliedes, welche über die Detektionseinheit erfasst wird.

Ferner kann es vorteilhaft sein, wenn das Drosselorgan ein Stellglied aufweist und als Abgasklappe oder als Abgasschieber ausgebildet ist. Klassische Klappen lassen sich gut mit einem Stellglied versehen, mittels dessen die Stellung des Drosselorgans veränderbar ist. Die Verstellung des Drosselorgans bzw. der Abgasklappe kann elektrisch, hydraulisch oder pneumatisch erfolgen.

Alternativ kann es auch vorgesehen sein, dass das Drosselorgan als Abgasblende ausgebildet ist. Bei bekannter und gleichbleibender Gaszusammensetzung und möglichst konstanter Ansaugtemperatur kann auch eine auf diese Bedingungen abgestimmte Abgasblende vorgesehen werden, die zwischen zwei Flanschen des Abgasstrangs eingeschoben wird. Diese wäre jedoch bei einer maßgeblichen Veränderung der Gaszusammensetzung entsprechend auszutauschen. Die Regel- bzw. Steuerorgane werden somit nicht benötigt. Die Erfassung des Ist-Differenzdrucks ist aber auf jeden Fall wichtig.

Gelöst wird die Aufgabe auch durch ein Verfahren zum Regeln eines einer Turbine eines Abgasturboladers nachgeschalteten Abgas-Drosselorgan eines Otto-Gasmotors mit einer Drosselklappe im Gemischstrang, wobei der Ist-Differenzdruck Δp über der Drosselklappe überwacht wird und bei zu hohem Differenzdruck das Drosselorgan teilweise geschlossen wird, bis der Ist-Differenzdruck Δp eine gewünschte Größe erreicht.

Im Zusammenhang mit dem erfindungsgemäßen Verfahren kann es von Vorteil sein, wenn
a) ein Schwellenwert Δp_sw und/oder ein Sollwert Δp_soll für den Differenzdruck Δp über der Drosselklappe vorgegeben wird;
b) der Ist-Differenzdruck Δp über der Drosselklappe ermittelt wird;
c) das Erreichen des Schwellenwertes Δp_sw oder eine Abweichung vom Soll-Differenzdruck Δp_soll ermittelt wird;
d) die Stellung des Drosselorgans in Abhängigkeit des Verhältnisses zwischen dem Ist-Differenzdruck Δp und dem

Schwellenwert Δp_sw oder dem Soll-Differenzdruck Δp_soll verändert wird. Eine Auflösung von 50 mbar für den Ist-Differenzdruck Δp mit einer Ansteuerfrequenz von 10/min ist dabei ausreichend.

Die Anwendung eines Sollwertes oder eines Schwellenwertes ist beliebig und als Äquivalent zu betrachten. Der Schwellenwert ist genau genommen auch nichts anderes als ein Soll-Grenzwert, bei dessen Erreichen die Regelung des Drosselorgans einsetzt.

Außerdem kann es vorteilhaft sein, wenn alternativ zu Schritt d) als Drosselorgan eine feste bzw. nicht veränderbare Abgasblende in den Abgasstrang eingesetzt wird, deren Öffnungsquerschnitt in Abhängigkeit des Verhältnisses zwischen dem Ist-Differenzdruck Δp und dem Schwellenwert Δp_sw oder dem Soll-Differenzdruck Δp_soll so groß gewählt wird, dass der gewünschte Soll-Differenzdruck Δp_soll über der Drosselklappe erreicht wird. Bei bekannter und gleichbleibender Gaszusammensetzung und möglichst konstanter Ansaugtemperatur kann auch eine auf diese Bedingungen abgestimmte Abgasblende vorgesehen werden, die zwischen zwei Flanschen des Abgasstrangs eingeschoben wird. Diese wäre jedoch bei einer maßgeblichen Veränderung der Gaszusammensetzung entsprechend auszutauschen. Die Regel- bzw. Steuerorgane werden somit nicht benötigt. Die Erfassung des Differenzdrucks ist aber auf jeden Fall wichtig.

Ferner kann es vorteilhaft sein, wenn als Sollwert Δp_soll zwischen 50 mbar und 400 mbar, insbesondere 300 mbar und/oder als Schwellenwert Δp_sw 200 mbar bis 400 mbar eingestellt werden. Je größer der obere Grenzwert ist, desto größer ist zwar die Reserve für Lastwechsel. Gleichfalls ist der Abstand zur Pumpgrenze entsprechend klein. Eine untere Grenze unter 50 mbar führt praktisch dazu, dass das Drosselorgan stets offen bleibt.

Weitere Vorteile und Einzelheiten der Erfindung sind in den Patentansprüchen und in der Beschreibung erläutert und in den Figuren dargestellt. Es zeigen:
- Figur 1: eine Prinzipskizze der Schutzvorrrichtung;
- Figur 2: eine alternative Ausführungsform.

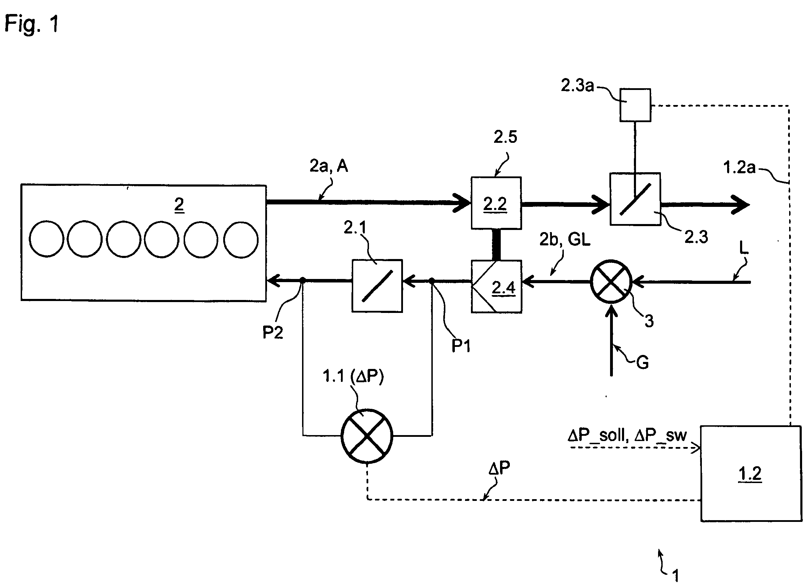

Ein in Figur 1 skizzierter Otto-Gasmotor 2 weist einen Abgasstrang 2a mit einer Turbine 2.2 eines Abgasturboladers 2.5 und einem daran in Strömungsrichtung eines Abgases A anschließenden Drosselorgan 2.3 auf. Zudem ist ein Gemischstrang 2b für Frischluft L und Gas G vorgesehen, mit einem Ladeluft- bzw. Gemischverdichter 2.4 des Abgasturboladers 2.5, an den sich in Strömungsrichtung des Gas-Luftgemisches GL eine Drosselklappe 2.1 anschließt. Die Frischluft L und das Gas G werden in einer Mischstelle 3 gemischt.

Im Bereich der Drosselklappe 2.1 ist als Teil der Schutzvorrichtung 1 eine Detektionseinheit 1.1 mit zwei Drucksensoren P1, P2 vorgesehen, mittels derer ein Ist-Differenzdruck Δp über der Drosselklappe 2.1, also vor und nach der Drosselklappe 2.1 erfassbar ist. Über eine Steuereinheit 1.2 wird der Ist-Differenzdruck Δp errechnet, so dass in Abhängigkeit dieses Ist-Differenzdrucks Δp über die Steuereinheit 1.2 die Stellung des Drosselorgans 2.3 veränderbar ist.

Hierzu weist das Drosselorgan 2.3 ein Stellglied 2.3a auf, das elektrisch, hydraulisch oder pneumatisch funktioniert.

Der Differenzdruck Δp über der Drosselklappe 2.1 wird überwacht, wobei bei zu hohem Differenzdruck Δp das Drosselorgan 2.3 teilweise geschlossen wird, bis der Differenzdruck Δp auf eine gewünschte Größe gefallen ist.

Hierzu kann ein Schwellenwert Δp_sw und/oder ein Soll-Differenzdruck Δp_soll für den Differenzdruck Δp über der Drosselklappe 2.1 der Steuereinheit 1.2 vorgegeben werden, welche diesen mit dem Ist-Differenzdruck Δp über der Drosselklappe 2.1 vergleicht. Bei Erreichen des Schwellenwertes Δp_sw oder bei Überschreiten des Soll-Differenzdrucks Δp_soll gibt die Steuereinheit 1.2 über eine Steuerleitung 1.2a ein Signal an das Stellglied 2.3a, so dass die Stellung des Drosselorgans 2.3 so verändert wird, dass der Durchflussquerschnitt verringert wird, mithin der Abgasgegendruck am Turbinenaustritt des Abgasturboladers 2.5 erhöht wird.

Der Durchflussquerschnitt des Drosselorgans 2.3 wird demnach so eingestellt, dass ein Erreichen des Schwellenwertes Δp_sw oder ein Überschreiten des Soll-Differenzdrucks Δp_soll verhindert wird.

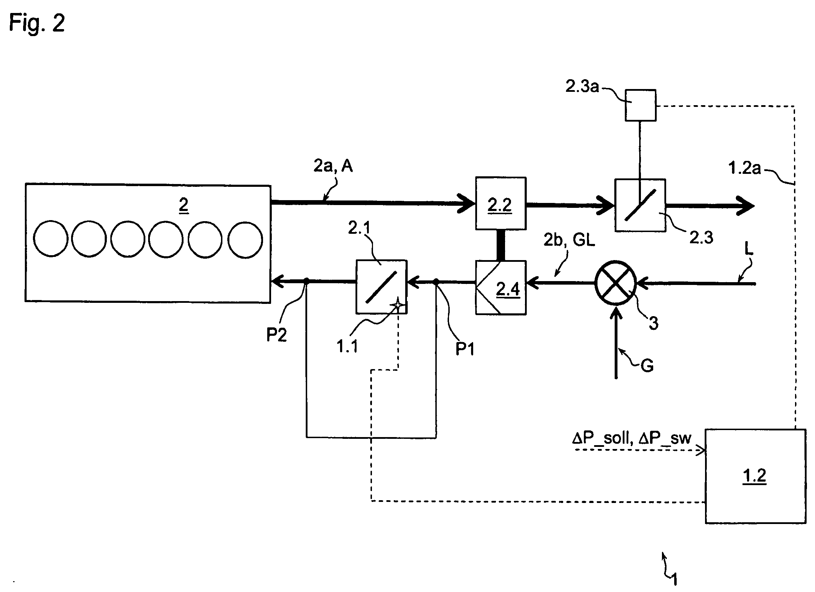

Nach Figur 2 ist als Detektionseinheit 1.1 eine Sensoreinheit zur Ermittlung der Stellung der Drosselklappe 2.1 vorgesehen. Aus der Stellung der Drosselklappe 2.1 kann der aktuell herrschende Ist-Differenzdruck Δp abgeleitet werden. Dies erfolgt über eine in der Steuereinheit 1.2 hinterlegte Funktion.

### Bezugszeichenliste

- 1: Schutzvorrichtung
- 1.1: Detektionseinheit
- 1.2: Steuereinheit
- 1.2a: Steuerleitung
- 2: Otto-Gasmotor
- 2.1: Drosselklappe
- 2.2: Turbine des 2.5
- 2.3: Drosselorgan, Abgasklappe, Abgasschieber, Abgasblende
- 2.3a: Stellglied
- 2.4: Ladeluft- bzw. Gemischverdichter
- 2.5: Abgasturbolader
- 2a: Abgasstrang
- 2b: Gemischstrang
- 3: Mischstelle

- A: Abgas
- Δp: Ist-Differenzdruck
- Δp_soll: Soll-Differenzdruck
- Δp_sw: Schwellenwert des Differenzdrucks
- G: Gas
- GL: Gas-Luftgemisch
- L: Luft, Frischluft
- P1: Drucksensor
- P2: Drucksensor

## Patentansprüche

1. Schutzvorrichtung (1) für einen Otto-Gasmotor (2) mit einer Drosselklappe (2.1) für Gas-Luftgemisch GL und mit einem eine Turbine (2.2) aufweisenden Abgasturbolader (2.5), dem ein Drosselorgan (2.3) für Abgas A zugeordnet ist, mit:
einer Detektionseinheit (1.1), die dazu ausgebildet ist, einen Ist-Differenzdruck Δp über der Drosselklappe (2.1) zu erfassen, und
eine Steuereinheit (1.2), die dazu ausgebildet ist, in Abhängigkeit des Ist-Differenzdrucks Δp die Stellung des Drosselorgans (2.3) zu verändern,
wobei,
das Drosselorgan (2.3) für das Abgas A mit Bezug zur Strömungsrichtung des Abgases A nur nach der Turbine (2.2) vorgesehen ist.

2. Schutzvorrichtung (1) nach Anspruch 1, wobei
die Detektionseinheit (1.1) zwei Drucksensoren P1, P2 zur Ermittlung des Differenzdrucks Δp über der Drosselklappe (2.1) aufweist
oder
als Sensoreinheit zur Ermittlung der Stellung der Drosselklappe (2.1) ausgebildet ist und aus der Stellung der Drosselklappe (2.1) der aktuell herrschende Ist-Differenzdruck Δp über eine in der Steuereinheit (1.2) hinterlegte Funktion abgeleitet werden kann.

3. Schutzvorrichtung (1) nach Anspruch 1 oder 2, wobei das Drosselorgan (2.3) ein Stellglied (2.3a) aufweist und als Abgasklappe oder als Abgasschieber ausgebildet ist.

4. Otto-Gasmotor (2) mit:
einem Abgasstrang (2a), der eine Turbine (2.2) eines Abgasturboladers (2.5) aufweist,
einem Gemischstrang (2b), der einen an die Turbine (2.2) gekoppelten Gemischverdichter (2.4) für ein Gas-Luftgemisch GL und eine mit Bezug zur Strömungsrichtung nach einem Gemischverdichter (2.4) vorgesehene Drosselklappe (2.1) aufweist, und
einer Schutzvorrichtung (1) nach einem der Ansprüche 1 bis 3.

5. Verfahren zum Regeln eines einer Turbine (2.2) eines Abgasturboladers (2.5) nachgeschalteten Abgas-Drosselorgans (2.3) eines Otto-Gasmotors (2) mit einer Drosselklappe (2.1) im Gemischstrang (2b), wobei das Verfahren folgende Schritte aufweist:
Überwachen des Differenzdrucks Δp über der Drosselklappe (2.1), und
teilweises Schließen des Abgas-Drosselorgans (2.3) bei zu hohem Differenzdruck Δp, bis der Differenzdruck Δp auf eine gewünschte Größe gefallen ist.

6. Verfahren nach Anspruch 5, ferner mit den Schritten:
a) Vorgeben eines Schwellenwertes Δp_sw und/oder eines Sollwertes Δp_soll für den Differenzdruck Δp über der Drosselklappe (2.1);
b) Ermitteln des Ist-Differenzdrucks Δp über der Drosselklappe (2.1);
c) Ermitteln des Erreichens des Schwellenwertes Δp_sw oder Ermitteln einer Abweichung vom Soll-Differenzdruck Δp_soll; und
d) Verändern der Stellung des Drosselorgans (2.3) in Abhängigkeit des Verhältnisses zwischen dem Ist-Differenzdruck Δp und dem Schwellenwert Δp_sw oder dem Ist-Differenzdruck Δp und dem Soll-Differenzdruck Δp_soll.

7. Verfahren nach Anspruch 6, ferner mit den Schritten:
a) Vorgeben eines Schwellenwertes Δp_sw und/oder eines Sollwertes Δp_soll für den Differenzdruck Δp über der Drosselklappe (2.1);
b) Ermitteln des Ist-Differenzdrucks Δp über der Drosselklappe (2.1);
c) Ermitteln des Erreichens des Schwellenwertes Δp_sw oder Ermitteln einer Abweichung vom Soll-Differenzdruck Δp_soll; und
d) Einsetzen einer Abgasblende in den Abgasstrang (2a), wobei die Abgasblende einen Öffnungsquerschnitt aufweist, der in Abhängigkeit des Verhältnisses zwischen dem Ist-Differenzdruck Δp und dem Schwellenwert Δp_sw oder dem Ist-Differenzdruck Δp und dem Soll-Differenzdruck Δp_soll so groß gewählt wird, dass der gewünschte Differenzdruck Δp über der Drosselklappe (2.1) erreicht wird.

8. Verfahren nach Anspruch 6 oder 7, wobei als Sollwert Δp_soll zwischen 50 mbar und 400 mbar, insbesondere 300 mbar und/oder als Schwellenwert Δp_sw 200 mbar bis 400 mbar eingestellt werden.

## Claims

1. A protection device (1) for a gaseous-fueled Otto-engine (2) including a throttle valve (2.1) for a mixture of gaseous fuel and air GL and a turbocharger (2.5) having a turbine (2.2) associated with a throttle device (2.3) for exhaust gas A, the protection device (1) comprising:
a detection unit (1.1) configured to detect an actual differential pressure Δp over the throttle valve (2.1), and
a control unit (1.2) configured to vary the position of the throttle device (2.3) in dependence of the actual differential pressure Δp,
wherein,
the throttle device (2.3) for exhaust gas A is provided only downstream of the turbine (2.2) with respect to the flow direction of the exhaust gas A.

2. The protection device (1) according to claim 1, wherein
the detection unit (1.1) includes two pressure sensors P1, P2 for determining the differential pressure Δp over the throttle valve (2.1)
or
is configured as a sensor unit for determining the position of the throttle valve (2.1) and can derive the current actual differential pressure Δp from the position of the throttle valve (2.1) using a function stored on the control unit (1.2).

3. The protection device (1) according to claims 1 or 2,
wherein the throttle device (2.3) includes an actuator (2.3a) and is configured as an exhaust flap or as an exhaust valve.

4. Gaseous-fueled Otto-engine (2) comprising:
an exhaust line (2a) including a turbine (2.2) of a turbocharger (2.5),
a mixture line (2b) including a mixture compressor (2.4) for a mixture of gaseous fuel and air GL, the mixture compressor (2.4) being coupled to the turbine (2.2), and a throttle valve (2.1) provided downstream of the mixture compressor (2.4) with respect to the flow direction, and
a protection device (1) according to anyone of claims 1 to 3.

5. A method for controlling an exhaust-throttle device (2.3) of a gaseous-fueled Otto-engine (2) having a throttle valve (2.1) in the mixture line (2b), the exhaust-throttle device (2.3) being arranged downstream of a turbine (2.2) of a turbocharger (2.5), the method comprising the following steps of:
monitoring the differential pressure Δp over the throttle valve (2.1), and
partially closing the exhaust-throttle device (2.3) for too high differential pressures Δp until the differential pressure Δp has dropped to a desired value.

6. The method according to claim 5, further comprising the steps of:
a) providing a threshold value Δp_sw and/or a set value Δp_set for the differential pressure Δp over the throttle valve (2.1);
b) determining the actual differential pressure Δp over the throttle valve (2.1);
c) determining that the threshold value Δp_sw has been reached or determining a deviation from the differential pressure set value Δp_set;
and
d) varying the position of the throttle device (2.3) in response to the ratio between the actual differential pressure Δp and the threshold value Δp_sw or the actual pressure Δp and the differential pressure set value Δp_set.

7. The method according to claim 6, further comprising the steps of:
a) providing a threshold value Δp_sw and/or a set value Δp_set of the differential pressure Δp over the throttle valve (2.1);
b) determining the actual differential pressure Δp over the throttle valve (2.1);
c) determining that the threshold value Δp_sw has been reached or determining a deviation from the differential pressure set value Δp_set; and
d) inserting an exhaust orifice in the exhaust line (2a), wherein the exhaust orifice includes an opening cross-section that is chosen depending on the ratio between the actual differential pressure Δp and the threshold value Δp_sw or the actual differential pressure Δp and the differential pressure set value Δp_set such that the desired differential pressure Δp over the throttle valve (2.1) is reached.

8. The method according to claims 6 or 7, wherein the set value Δp_set is set to be between 50 mbar and 400 mbar, preferably 300 mbar, and/or the threshold value Δp_sw is set to be between 200 mbar and 400 mbar.

## Revendications

1. Dispositif de protection (1) pour un moteur à gaz à allumage commandé (2) avec un papillon des gaz (2.1) pour un mélange de gaz et d'air GL et avec un compresseur des gaz d'échappement (2.5) présentant une turbine (2.2), auquel est associé un organe d'étranglement (2.3) pour des gaz d'échappement A, avec :
une unité de détection (1.1) qui est réalisée afin de détecter une pression différentielle réelle Δp par le biais du papillon des gaz (2.1), et
une unité de commande (1.2) qui est réalisée afin de modifier, en fonction de la pression différentielle réelle Δp, la position de l'organe d'étranglement (2.3),
l'organe d'étranglement (2.3) étant prévu pour les gaz d'échappement A par rapport au sens d'écoulement des gaz d'échappement A uniquement après la turbine (2.2).

2. Dispositif de protection (1) selon la revendication 1, l'unité de détection (1.1) présentant deux capteurs de pression P1, P2 pour la détermination de la pression différentielle Δp par le papillon des gaz (2.1)
ou
étant réalisée en tant qu'unité de capteur pour la détermination de la position du papillon des gaz (2.1) et la pression différentielle réelle régnant actuellement Δp pouvant être dérivée de la position du papillon des gaz (2.1) par une fonction enregistrée dans l'unité de commande (1.2).

3. Dispositif de protection (1) selon la revendication 1 ou 2, l'organe d'étranglement (2.3) présentant un organe de réglage (2.3a) et étant réalisé comme clapet d'échappement ou comme registre à fumées.

4. Moteur à gaz à allumage commandé (2) avec :
une ligne de gaz d'échappement (2a) qui présente une turbine (2.2) d'un compresseur des gaz d'échappement (2.5),
une ligne de mélange (2b) qui présente un compresseur de mélange (2.4) couplé à la turbine (2.2) pour un mélange de gaz et d'air GL et un papillon des gaz (2.1) prévu par rapport au sens d'écoulement après un compresseur de mélange (2.4), et
un dispositif de protection (1) selon l'une quelconque des revendications 1 à 3.

5. Procédé de régulation d'un organe d'étranglement de gaz d'échappement (2.3) monté en aval d'une turbine (2.2) d'un compresseur des gaz d'échappement (2.5) d'un moteur à gaz à allumage commandé (2) avec un papillon des gaz (2.1) dans la ligne de mélange (2b), le procédé présentant les étapes suivantes :
la surveillance de la pression différentielle Δp par le biais du papillon des gaz (2.1) et
la fermeture partielle de l'organe d'étranglement de gaz d'échappement (2.3) en cas de pression différentielle trop élevée Δp, jusqu'à ce que la pression différentielle Δp soit réduite à une grandeur souhaitée.

6. Procédé selon la revendication 5, de plus avec les étapes suivantes :
a) la prescription d'une valeur seuil Δp_sw et/ou d'une valeur de consigne Δp_consigne pour la pression différentielle Δp par le biais du papillon des gaz (2.1) ;
b) la détermination de la pression différentielle réelle Δp par le biais du papillon des gaz (2.1) ;
c) la détermination de l'atteinte de la valeur seuil Δp_sw ou la détermination d'un écart de la pression différentielle de consigne Δp_consigne ; et
d) la modification de la position de l'organe d'étranglement (2.3) en fonction du rapport entre la pression différentielle réelle Δp et la valeur seuil Δp_sw ou la pression différentielle réelle Δp et la pression différentielle de consigne Δp_consigne.

7. Procédé selon la revendication 6, de plus avec les étapes suivantes :
a) la prescription d'une valeur seuil Δp_sw et/ou d'une valeur de consigne Δp_consigne pour la pression différentielle Δp par le biais du papillon des gaz (2.1) ;
b) la détermination de la pression différentielle réelle Δp par le biais du papillon des gaz (2.1) ;
c) la détermination de l'atteinte de la valeur seuil Δp_sw ou la détermination d'un écart de la pression différentielle de consigne Δp_consigne ; et
d) l'insertion d'un diaphragme de gaz d'échappement dans la ligne de gaz d'échappement (2a), le diaphragme de gaz d'échappement présentant une section transversale d'ouverture qui est choisie si grande en fonction du rapport entre la pression différentielle réelle Δp et la valeur seuil Δp_sw ou la pression différentielle réelle Δp et la pression différentielle de consigne Δp_consigne que la pression différentielle souhaitée Δp soit atteinte par le biais du papillon des gaz (2.1).

8. Procédé selon la revendication 6 ou 7, comme valeur de consigne Δp_consigne entre 50 mbar et 400 mbar, en particulier 300 mbar et/ou comme valeur seuil Δp_consigne 200 mbar à 400 mbar étant réglés.
